# EUROPEAN PATENT APPLICATION

(11) **EP 1 967 849 A1**
(43) Date of publication of application: **10.09.2008**
(21) Application number: 05826210.6
(22) Date of filing: 30.12.2005
(51) Int. Cl.: G01N 27/64, G01N 1/22, G01V 9/00

(54) **METHOD FOR DETECTING CHEMICAL SPECIES AND DEVICE FOR IMPLEMENTING SAME**

(71) Applicant: Ramem, S.A., 28027 Madrid (ES)
(72) Inventor: RAMIRO ARCAS, Emilio, 28027 Madrid (ES); RIVERO JIMÉNEZ, Angel, 28027 Madrid (ES)
(74) Representative: Esteban Perez-Serrano, Maria Isabel
(86) International application number: PCT/ES2005/070187
(87) International publication number: WO 2007/077263

(57) **Abstract**

The present invention relates to a procedure for detection of chemical species as well as the device which carries out said procedure where by chemical species are to be considered those species formed either by molecules or by more complex compounds with sizes which can reach submicrometer scales. This procedure is **characterized in** the use of a sequential set of stages which allows different classification criteria to be applied to allow the presence or not of target species to be discerned with an almost negligible failure rate. The device which implements these stages applies each discrimination criterion making use of modules capable of distinguishing two species according to a different physical, electrical or chemical property.

## Description

### OBJECT OF THE INVENTION

The present invention relates to a procedure of high sensitivity and resolution for the detection of chemical species in gaseous medium with very low concentrations, as well as the device which carries out said procedure where chemical species are to be considered as those substances formed either by molecules or by more complex compounds.

This procedure is characterized in the use of a sequential set of stages which allows different classification criteria to be applied to allow the presence or not of target species to be discerned with high reliability.

This device is characterized by a set of modules serving to carry out the different stages of the procedure in such a way that each stage makes use of a criterion capable of distinguishing two species according to a different physical, electrical or chemical property.

This procedure is characterized in the presence of some first classification stages which allow the intake of samples establishing a first classification by size and adsorption properties with respect to diverse materials.

A second stage establishes a classification according to the ionization capability of the species; and, for the species that are ionizable, a distinguishing criterion is established based on their charge and electrical mobility making use of an injector together with a differential mobility analyzer (DMA).

Optionally it is possible to establish a last stage in which a classification criterion is established based on the "time of flight" (TOF).

The device object of this invention which carries out the procedure is designed to work in continuous mode by making use of modules working in parallel for those processes in which a discontinuous individual operation exists.

### BACKGROUND OF THE INVENTION

From among the systems of analysis known at the present time, attention is drawn to those based on gas chromatography - mass spectrometry (GC-MS). These instruments have a high resolution in the analysis of volatile organic compounds and they are based on two separation methods but they have the drawback that the analysis cannot be carried out in continuous mode. They also have low sampling flow rates and low response rates.

Another method of analysis is based on the socalled "electronic noses". These devices are usually based on a single method of detection depending on the type of sensors which they contain. The sensitivity of these devices is not very high and they generally need a long training period before their operation.

Among the methods of analysis which use the electrical mobility of the species to be detected, the best known are the ion mobility spectrometers (IMS) and the differential mobility analyzers (DMA).

In the ion mobility spectrometers the separation is achieved by separating ions with different electrical mobility in time. In these instruments the sampling flow rates are low and their sensitivity is not very high.

The differential mobility analyzers (DMAs) are devices known for their use in the laboratory and also commercially.

These devices seek to detect of substances by discrimination in space, in continuous mode and with high sensitivity based on the different electrical mobility of ionized species.

In this type of device it is possible to distinguish between different substances which are supplied through the inlet. Although the resolution of these devices is high, they are not in themselves elements capable of being used as instruments for detection of target substances, with the resolution and sensitivity disclosed in this invention, because they are only able to distinguish between species by their different behavior with regard to the electrical mobility which characterizes each.

The instruments based on electrical mobility need the species to be ionized. The ionization methods commonly employed for gases are radioactive ionization and corona ionization. These methods have very reduced selectivity regarding the species to be ionized.

It is known the electrical mobility analyzer which is described in the Patent with application number PCT/ES2005/070121 wherein a high resolution is attained by combining the use of a pressurized aerodynamic tunnel in which the internal stream is totally guided together with the use of multitrack sensors.

Although this device increases the resolution by crossed flow operation at high Reynolds number and a Mach number near to unity in which in addition cleanliness and a turbulence level of this crossed flow below a certain very reduced value in the analysis region are assured, this is not sufficient to constitute in itself a device for detection of species with the objectives proposed in the invention.

It is the combination of this type of devices with other different stages and with the appropriate criteria which allows an effective device to be obtained in the sense that it achieves the detection of minimum amounts of the target substance or substances and at the same time the possibility of false positives is reduced to the maximum degree.

It is fitting to point out that the avoidance of false positives in a real situation is just as important as the detection of the presence of a substance, as the former can give rise to the stoppage of an entire production chain or the groundless disqualification of a sportsman.

An example of application of substance detection is the foodstuffs control which can be carried out to check for the presence of toxic substances.

In these cases it is necessary to distinguish between different volatile and nonvolatile substances or even substances attached to bigger species, with different characteristic diameter, and other physical properties.

It is known the patent with publication number US2003199100 wherein a device is disclosed which carries out a purification and concentration stage, an atomization by means of an "electro spray" to thereafter conduct its output to a differential mobility analyzer.

In this device there are no means which assure an initial selective concentration mode nor are means established in parallel which allow the device to be maintained operative in continuous mode. Likewise, in the input to the DMA, use is made of an "electro spray" which establishes a medium for introducing the sample which has to be in the liquid phase and which is not defined as a means of separation since an inlet stream is present in the DMA cited. One of the main applications for which it is intended is virus detection.

The present invention establishes a set of stages working in sequential mode in which a classification criterion is applied which allows the progressive discrimination and separation of species which have different physical, chemical or electrical characteristics.

### DESCRIPTION OF THE INVENTION

The present invention consists of a procedure constituted by a set of stages in which each one of them establishes a mode of classification based on variables of physical, electrical or chemical nature.

Starting with an intake stream in which there can exist all types of volatile and nonvolatile substances, it is necessary to remove the species that are not considered as the target to be detected.

To do so, each of the stages discriminates the candidate species to be introduced in the following stage. They are termed candidates because it is possible that a set of species meet a certain classification criterion but not the following one. It will be the ensuing stages which serve to distinguish between one and the other, removing in some cases the substances that do not satisfy the criterion.

Although individually some of the stages may be known through the existence of particular devices which carry out such classifications (for example the use of a filter, or the use of a DMA), the objective in this invention is to combine sequentially a set of stages consisting in the discrimination by different criteria such that by collaborating jointly they result in the effective detection of the target substances.

The sequence of stages which constitute the present invention is:
● *Admission of air.* The term air in the description and in the claims, shall be understood in the broad sense, it being possible to include any gas or aerosol. Although the admission of air can be implemented integrated in a fixed device, e.g. mouthpieces for blowing, or hose or suction grill, the inclusion of multiple intakes is of interest. With this or these intakes it is possible to select and to analyze areas in which there are possibilities that target substances are to be found. In addition, the use of this type of intakes can be implemented with hoses or means which permit not moving the device and only moving the end of the intake.
   An interesting way of acquiring the sample is by means of a localizer consisting in making use of an intake with the capability of omnidirectional detection of the direction of maximum concentration. The taking of samples is carried out sequentially. The signal obtained is combined with other types of readings such as the wind speed and direction in order to be able to determine the most probable origin in space of the detected substance.
● *Filtration stage*. This is really the first stage which in turn can be subdivided into two, since it establishes a first classification by particulate size if the filter is physical, and a second by chemically similar sets if the filter is chemical. The inclusion of one or more filters of calibrated porosity in series allows species to be eliminated above a certain value of the characteristic diameter.
● *Moisture elimination stage.* If convenient, and depending on the type of species to be detected, it reduces the moisture content.
● *Concentration stage*. The concentration stage is a stage in which starting with a main stream of high flow rate and reduced concentration of species liable to be target substances, it is changed to a lower flow and with a greater concentration of these substances.
   In this invention a procedure is applied based on adsorption-desorption. According to this procedure there is a first phase of adsorption of substances in such a way that they are deposited in the material employed for this purpose and which will depend on the target substances. In a second phase a heating is carried out which collects these species and incorporates them into the second stream of lower flow rate and greater concentration.
   This adsorption-desorption has to be understood in its most general sense and can involve superficial or volumetric phenomena.
   Since this second stream is not formed simultaneously with the first, there are two or more concentrators such that the analysis is assured in continuous mode.
   The species which have not been adsorbed and retained will not pass to the following stage. This criterion depends on the chemical affinity with the material, it being possible to use various materials of selective adsorption according to the composition of the species.
   Optionally there can be additional filters which remove species whose characteristic diameter is below those employed in the first filtration stages.
   It is also possible to apply an additional criterion of discrimination based on the time required for the extraction of a certain substance according to the volatility thereof in such a way that the collection of the secondary stream is carried out in the time interval which corresponds to the highest probability of desorption of a certain target substance.
● *Ionization stage.* In this stage only the species capable of being ionized will be ionized, mainly volatile compounds.
   Depending on the ionization method, a different criterion of classification is established. For example, according to the energy of the photon in photoionization, according to the chemical species used in chemical ionization, etc. The ionization method depends on the target substance to be detected. When the species to be detected are volatile organic compounds, chemical ionization provides extremely high efficiency. One of the less aggressive methods of chemical ionization is by means of proton transfer. In this method an auxiliary chemical compound is protonized and is made to react with the target species.
   When the proton affinity of the substance of interest is greater than that of the carrier chemical compound the proton transfer takes place with the result that the substance of interest is ionized.
● *Injection stage*. When the species capable of being ionized have been ionized by the method employed, use is made of another stage called injection to introduce only the sample and direct it to the following stage. The injector consists of a cavity into which the ion-carrying stream of the sample is introduced. In the interior the separation and focalization of the ions takes place by means of an electric field adapted to the fluid field existing in its interior, so that the carrier stream emerges charge-free at the same time as the ions are injected into the following stage through the outlet slit of the injector.
   Not only are the ions removed, but also, by means of a series of electrostatic lenses, focalization and injection is achieved through a slit which will be coincident with the inlet to the following stage. According to the procedure of the module which implements this injection stage, there is no outgoing stream through the slit, except that due to the charges, and therefore the entirety of the carrying fluid is removed together with all the species that have not been ionized.
   The focalization produced by the electrostatic lenses allows the reduction, indeed the elimination, of the loss of samples on the walls of the injector, optimizing therefore the employment of this device in applications where a high sensitivity is necessary.
● *Classification stage according to electrical mobility of the ionized species.* In this case use is made of a differential mobility analyzer, where depending on the electrical mobility of the ionized species injected, either it is detected by means of a multitrack sensor or it is extracted through an outlet slit or slot. This stage is possible to implement by making use of a DMA like that described in the patent by the same applicant and with application number PCT/ES2005/070121, the description and abstract of which are included by reference in this specification; and which provides the option of carrying out an analysis of the non-linear behavior of the species, classified in the outlet slit of the DMA. Having reached this point, it is possible that the detection of the species has already taken place with sufficient resolution, nevertheless, diverse additional and optional stages are incorporated which allow the resolution to be enhanced for those cases in which in spite of the application of all these stages the selected species are different and it is required to distinguish them according to their differences of physical and electrical properties.
● *Signal processing stage.* When the ionized species has impinged on the multitrack sensor, the latter has emitted a signal which can be analyzed by making use of noise reduction, identification, and other algorithms. The algorithms based on the implementation of appropriately trained neural networks are specially effective.
   With this stage it is possible to extract information from the signal read by the sensor but which due to the presence of noise, interference or overlapping of more than one individual signal, it is not easily identifiable. Hence the application of signal processing techniques allows information to be revealed which allows species to be identified which would otherwise have passed unnoticed, as well as providing information on the sizes and the concentration of the same.
● *Specific classification stages*. In those cases in which it is necessary to distinguish between substances so alike that it has not been possible to distinguish them previously, it becomes necessary to apply additional criteria based on differences in the mass / charge ratio including thereby the different inertia of the species or also on non-linear behavior in the electrical mobility.
   This classification can be carried out for example by means of mass spectrometry, making use of a spectrometer of those which measure the time of flight; that is, where the mass/charge ratio is obtained by measuring the time that the ions, previously accelerated by an electric field, take to travel a field-free tube.

The stages of signal processing and of admission of air and/or concentration are interconnected in order to avoid the saturation of the detectors so that the admission flow rates will be a function of the signal from the sensor.

An important aspect of the system is the possibility of self-cleaning, using for this a combination of inert gas flows, heated and in counterflow or other photochemical techniques.

In the event that the substances of interest are volatile compounds it is important to avoid the condensation of the same through temperature differences in the modules and in the interconnections between the same. For this reason, starting from the concentration stage the modules and connections are kept at a temperature higher than the condensation point of the species.

It is possible to implement this procedure by means of a device consisting of modules in which each module comprises one or more stages. The description of this embodiment will be made in the section dedicated to the detailed explanation of the invention.

### DESCRIPTION OF THE DRAWINGS

The present descriptive specification is supplemented with a set of drawings which illustrate the preferred embodiment of the invention in a non-restrictive manner.
Figure 1 is a schematic representation of the set of stages which constitute the invention including the grouping which establishes the implementation according to the preferred embodiment of the device which carries out said procedure.

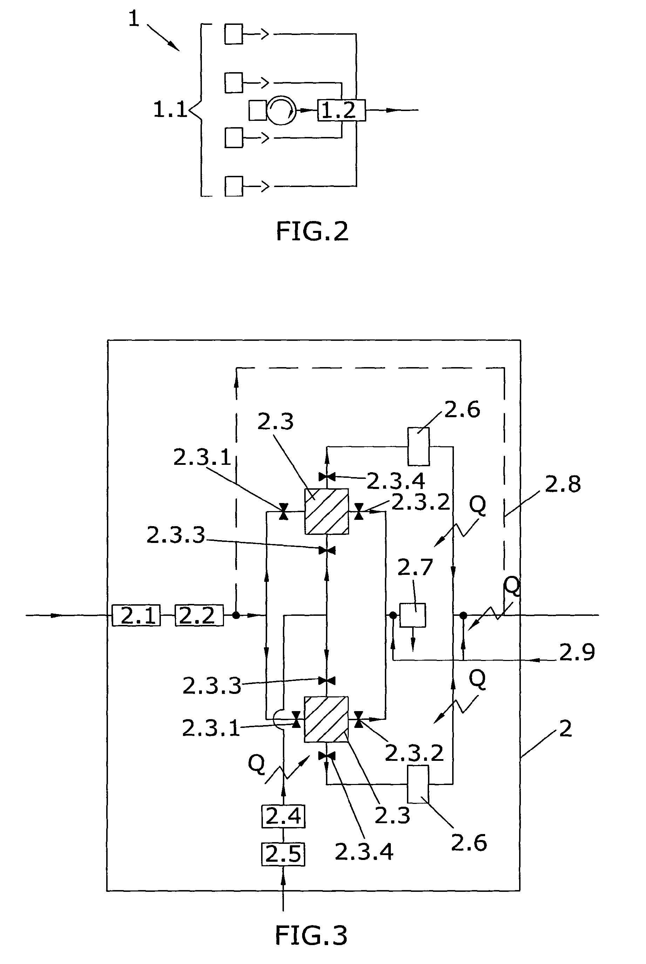

Figure 2 is a schematic representation of the admission module.
Figure 3 shows a schematic representation of the concentration module.
Figure 4 is a schematic representation of the ionizer.
Figure 5 is a schematic representation of the injector.
Figure 6 is a schematic representation of the time of flight spectrometer.

### DETAILED EXPLANATION OF A MODE OF EMBODIMENT

Having described the set of classification stages according to the invention for the sequential discrimination in continuous mode of a set of species acquired in one or more sample intakes, wherein the following can be established as basic:
● an admission of air with single or multiple intakes of the area to be analyzed,
● a filtration stage with discrimination by size of species by means of the use of physical filters and with discrimination by families of chemical species when use is made of chemical filters or both at the same time,
● a concentration stage based on a procedure of adsorption and desorption where from the main stream a subset of species with chemical discrimination and by electrical affinity by selection of the adsorption material is transferred to a secondary stream of lower flow rate,
● an ionization stage with discrimination according to the ionization procedure,
● an injection stage with discrimination and separation based on the charge and electrical mobility of the species in such a way that only the charged species are collected,
● a classification stage according to the electrical mobility of the species,
   and it also being possible to have
● a signal processing stage,
● one or several stages of specific classifications,
● a stage for tracking the emission source.

A device is described below which carries out said procedure.

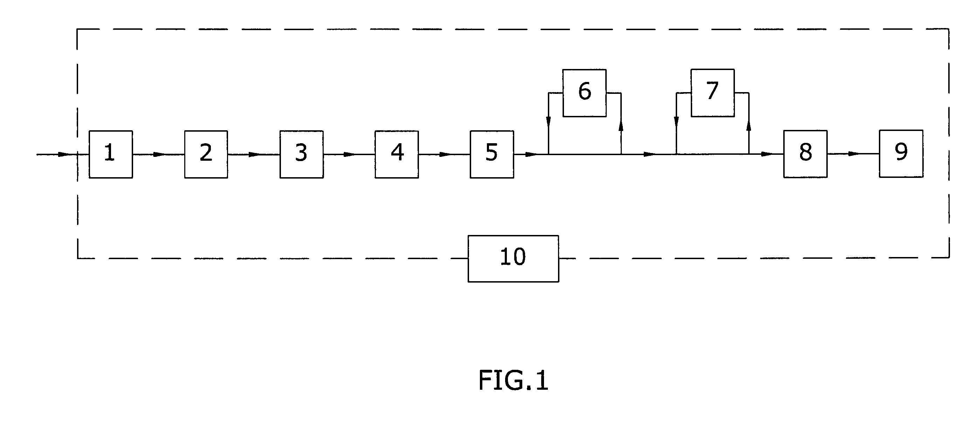

Figure 1 is a schematic representation of the arrangement of the different modules which carry out the stages of the procedure.

The first module (1) or admission module is constituted by a set of sample intakes (1.1).

In this example several have been used in order to be able to acquire multiple samples simultaneously. Nevertheless it can be implemented with a single intake (1.1) which is fixed or rotary in azimuth and elevation in order to be able to determine the orientation in the suction direction, said intake being capable of omnidirectional detection.
If there are several intakes, they converge in a multiplexer (1.2) which allows the intake (1.1) to be distinguished which is carrying out the suction in order to be able to allow the source to be localized from where the target specie or species proceed. The word species is used, both because more than one can be acquired and detected, and because the simultaneously detectable substances can be more than one by applying the different stages. Sufficient to say that in one of the final stages, that of the differential mobility analyzer, use is made of a multitrack sensor capable of detecting species of different mobility simultaneously.

It has been found that an appropriate working flow rate can be situated around some dozens or hundreds of liters per minute, both this and other flow rates being orientative and dependent upon the overall size of the installation.

When the sample has been drawn in, it is necessary to pass to a more reduced flow rate and which contains a higher concentration of the species to be distinguished.

The second module (2) is that which serves to carry out the concentration. This second module (2) makes use of elementary modules (2.3) of adsorption and desorption through which the main stream which comes from the absorption is made to pass.

The elementary module (2.3) of adsorption and desorption has an adsorbing material which has a function of retaining a set of species which must then be released in a second stream. The second stream is that which will transport at a lower flow rate, which can be of the order of a dozen liters per minute, these species to the following modules.

Before making the main stream pass through the adsorbing material of the elementary modules (2.3) several previous stages are established for the removal of undesired species: one or more filters (2.1), be they of those which have been termed physical, to remove species of a size greater than a given one, or chemical to retain families of chemical species.

The stream which leaves the sequence of filters (2.1) can pass through a desiccating material (2.2) which removes water vapor.

Since the adsorption of species carried out by the adsorbing material of the elementary modules (2.3) and the later desorption by means of a secondary stream has to be done in different instants of time, in this embodiment of the invention the set of elementary modules (2.3) comprising adsorbing material has been duplicated. Although in the schematic use has been made of two elementary modules (2.3) which perform the function of partial concentrators, it is possible to include a plurality of them so that at all times there is one in the period of adsorption of the main stream and also there is always one of them in the desorption period.

Thus a continuous processing is achieved of the main and secondary streams. In addition, the presence of more than one elementary module (2.3) also allows the specialization of each of them in families of different chemical species.

Control of the intake and outgoing streams of each of the elementary modules (2.3) is carried out by means of valves.

In the elementary modules there are intake (2.3.1) and outlet (2.3.2) valves of the main stream and intake (2.3.3) and outlet (2.3.4) valves of the secondary stream.
The adsorption and the desorption take place simultaneously in different branches. While one of the elementary modules is in the adsorption cycle the other is in the desorption cycle.

During one of these cycles the intake (2.3.1) and outlet (2.3.2) valves of one of the branches of the main stream are open as well as the intake (2.3.3) and outlet (2.3.4) valves of one of the other branches of the secondary stream. In the following cycle the open valves are changed to closed and the closed valves to open.

The outlet of the main stream reaches a pump (2.7) which is that which carries out the suction. The presence of the pump in the outlet allows the latter to work with a clean current since it is located after the filters (2.1); nevertheless, in the event of making use of pumps which can work in more adverse conditions for the presence of impurities, their location could be moved upstream.

The secondary stream is achieved by blowing with a pump (2.5) through a filter (2.4) or sucking from the injector.

As has already been commented in the description, it is possible optionally to include additional filters (2.6) at the outlet of the secondary stream which make use of porosities of lower characteristic diameter than those used in the first filters (2.1).

The adsorbing material of the elementary modules (2.3) requires operating at temperature for desorbing the previously adsorbed molecules. The heating is carried out by resistance elements or by laser ablation represented in the schematic of figure 1 as a provision of heat (Q).

By means of a discontinuous line an alternative pipe (2.8) has been represented which allows the concentration stage to be bypassed in those cases in which said concentration is already sufficiently high or signifies a danger of saturation in the ensuing stages.

This alternative pipe (2.8) has valves on its ends and at the intake, after the filters and dryers, and the outlet of stage (2) to divert the flow. Such valves have not been represented graphically for greater clarity.

One also has control over the concentration by means of the variation of the flow rates, both primary and secondary, the objective being to avoid the saturation of the equipment.

A counterflow line (2.9) exists which uses clean and hot air to perform the cleaning of the adsorbing elements, the filters, and the rest of the elements of the line (pipes, valves, etc.). This air can come from the secondary circuit or from a specific cleaning module.

The counterflow is carried out in those cases in which the analysis of the substances produces a positive in order to avoiding false positives in the ensuing analyses. The counterflow is also applied periodically to maintain the equipment in optimum operational conditions.

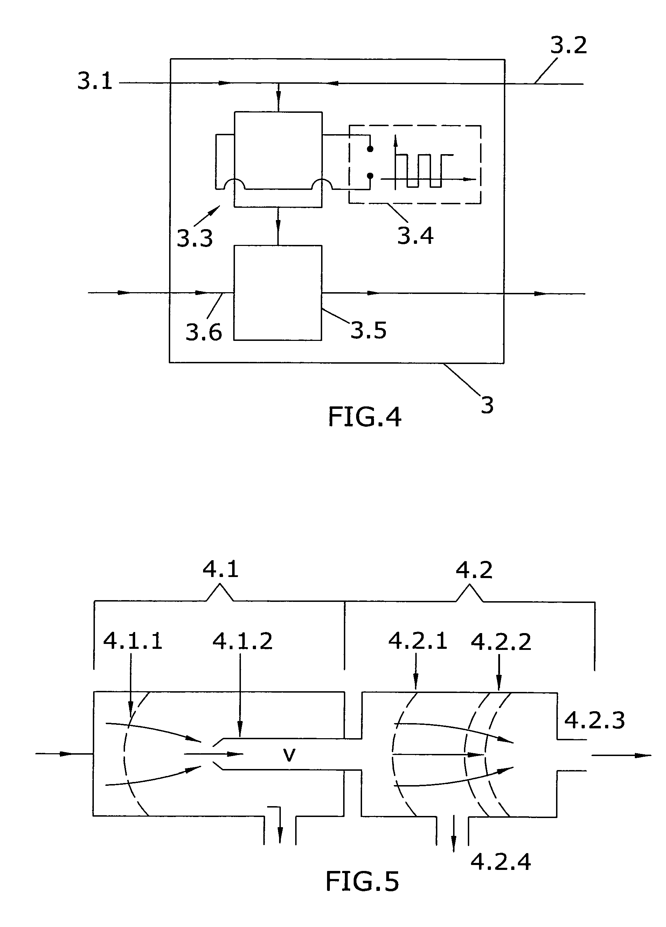

The output secondary flow is transported to a chemical ionization third module (3) and which in this example of embodiment is of ionization by means of proton transfer. This ionization third module (3) is represented schematically in figure 4.

The third module (3) comprises two intakes: one for the conveying gas (3.1) and another for a secondary chemical compound (3.2), which can be water vapor, methane or another chemical compound whose proton affinity is less than that of the target species. This secondary chemical compound is ionized in the plasma chamber (3.3) by means of a cold plasma produced by a pulsed high voltage source (3.4). Optionally the secondary compound can be produced by means of ionization by corona or electrospray. The ionized secondary compound passes to the reaction chamber (3.5) where the sample coming from an acquisition module (3.6) is introduced. The target species react with the secondary compound. When the proton affinity of the species of interest is greater than that of the carrier chemical compound, proton transfer takes place with the result that the target specie or species ionize.

As an example of reaction the ionization of an organic compound R is shown by means of the hydronium ion:

H₃0⁺ + R H₂O + RH⁺

Said reaction is exothermic and quick for compounds which have a proton affinity greater than that of water.

Tests have been carried out in which the chemical ionization has been specially effective in a wide range of applications.

Once the ionization third module (3) has been passed, the stream passes through the injection fourth module (4).

In figure 5 a schematic is represented of the injection fourth module (4). This module, depending on the flow rates, can consist of two elements: a preinjector (4.1) and an injection chamber (4.2). The preinjector reduces the flow rate and focalizes the charged species by means of an electrostatic lens (4.1.1) and an element which will be termed flow reduction (4.1.2). It is through the actual injection chamber (4.2) that the reduced flow enters at a certain speed (v). The arrangement of the flow intake and outlet openings results in the fluid field not being symmetrical in the chamber (4.2). The chamber (4.2) contains one or more electrodes and grids (4.2.1) arranged in an asymmetric form which establish a certain potential distribution. This potential distribution creates an electric field which adapts to the fluid dynamic field in such a way that the charged species will be pushed transversely until they separate from the flow. The combination of electrodes and grids form a region constituted by electrostatic lenses (4.2.2) intended to concentrate the trajectories of the ionized species toward an outlet slit (4.2.3). By means of the adequate selection of the electrical potentials it is possible to carry out a separation of the ionized species by their charge and electrical mobility.

Since the entirety of the intake secondary flow is removed from the injection fourth module (4) through a lateral outlet (4.2.4), only ionized species will leave through the outlet slot (4.2.3) conveyed solely by the electric field.

The species that leave the injector are introduced in a fifth module (5) consisting of a differential mobility analyzer (DMA) where for this example an identical one has been used to that described in the patent with application number PCT/2005/070121 and the description and abstract of which have already been included by reference.

This analyzer has a multitrack sensor able to pick up the signal from species of different electrical mobility. Additionally it can have one or more outlet slits through which the extraction of species with a certain electrical mobility is carried out.

The signal obtained in the multitrack sensor is introduced into an eighth module (8) consisting essentially of a microprocessor which carries out a processing of the signal to identify the possible incident species as a function of their electrical mobility. Combining these data together with other data from the extraction points of the samples which the admission module (1) provides, it is possible to determine the localization of the source of the target substance. This localization function is carried out with a ninth module (9) mounted after the signal processing eighth module (8). The ninth module has sensors for the wind speed, position or other types necessary for the localization in space of the emission source.

In the same schematic of figure 1 an alternative second branch has been shown which includes a seventh module (7) which incorporates a mass spectrometer based on measuring the time of flight.

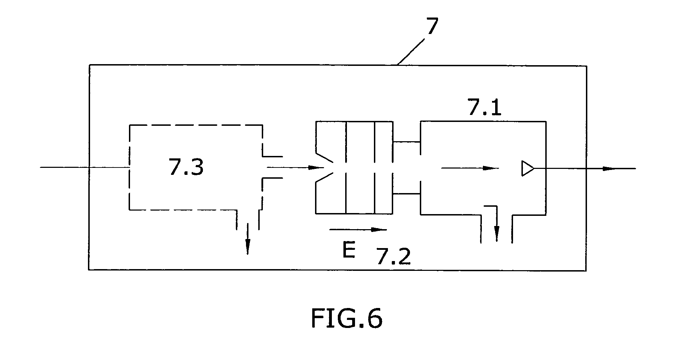

This mass spectrometer employed in this example is shown in figure 6. The analysis of the charge / mass ratio is based on measuring the time which the ions, previously accelerated by an electric field (7.2), take to travel a field-free tube (7.1). As the flow which these types of spectrometers accepts is very small, a flow reducer (7.3) becomes necessary of a type similar to that of the fourth module (4) which allows the connection of the DMA and the TOF. As in the injector (4) where use was made of a stage of flow reduction by lateral diversion of the stream together with a focalization of the ions toward an outlet slit, in this seventh module (7) it is also possible optionally to incorporate a flow reducer (7.3) based on the same principle for example. Such a reducer (7.3) is shown schematically by means of discontinuous lines in figure 6.

It must be pointed out that if the differential mobility analyzer which constitutes the fifth module (5) does not have at its outlet a classification module based on the non linearity in the behavior of the electrical mobility for high values of the electric field, like that described in the patent with application number PCT/2005/070121, it is possible to incorporate it as an additional module in this device, the module (6).

Lastly, to assure the proper operation of all the preceding modules and their respective analog and digital signals such as temperature, pressure, flow rate, voltage, etc., it has an automatic control module (10). This system is based on a central processing unit which communicates with different electronic interfaces by means of digital communication protocols.

The types of cards to use are: 0-10 V and 4-20 mA analog input cards, thermocouple measurement cards, 0-10 V analog and relay output cards, protocol converter cards.
In addition several PID controllers will be used for critical variables.

The computer to which the bus will be connected will be embedded and it will be possible to access it either by means of a touch screen, or remotely via an Ethernet bus.

The outcome of this assembly of modules is a device with high sensitivity and resolution, able to take samples and establish a sequential classification discriminating on a basis of different criteria according to the stages of the procedure object of this invention in a way such that the detection is achieved of target species in gaseous medium, with very low concentrations and with a very high level of reliability.

## Claims

1. - Procedure for detection of chemical species **characterized in that** it is implemented by means of a set of stages operating in continuous mode for selective discrimination according to different criteria comprising at least the following stages:
● an air admission stage with a single intake or with several intakes which allow several areas to be selected and analyzed,
● a filtration stage, either with discrimination by size of species by means of the use of physical filters of calibrated porosity, or with discrimination by families of chemical species when use is made of chemical filters or both at the same time,
● a stage of adjustable concentration based on a procedure of adsorption and desorption where from the main stream a subset of species is transferred to a secondary stream of lower flow rate than the main stream, with chemical discrimination by selection of the adsorption material,
● an ionization stage with discrimination according to the ionization procedure,
● an injection stage with discrimination and separation of the species, based on the charge and electrical mobility of the species in such a way that extraction only exists toward the analyzers of the charged species,
● a classification stage according to the electrical mobility of the species, using a differential mobility analyzes DMA
● a signal processing stage for the suppression of noise and for the identification of substances.

2. - Procedure for detection of species according to claim 1 **characterized in that** after the filtration, a moisture elimination stage is implemented.

3. - Procedure for detection of species according to claim 1 **characterized in that** the concentration is carried out with two or more sub-stages based on adsorption and desorption operating alternately in such a way that globally the concentration process is continuous.

4. - Procedure for detection of species according to claim 1 **characterized in that** during the stage of adsorption and desorption it is possible to establish a discrimination criterion based on the time required for the extraction of a certain substance according to its volatility in such a way that the removal of the secondary stream is carried out in the time interval which corresponds to the greatest probability of desorption of an target substance.

5. - Procedure for detection of species according to claim 1 **characterized in that** after the stage of discrimination according to the electrical mobility there is a mass spectrometer to establish a discrimination based on the mass / charge ratio.

6. - Procedure for detection of species according to claim 1 **characterized in that** the localization of the source of target species is carried out by combining the data of the reading after processing the signal and the data from the sample acquisition device.

7. - Procedure for detection of species according to claim 1 **characterized in that** additionally to the previous stages and in a manner prior to the process of species detection a self-cleaning is carried out of the entire device in which a combination of flows of inert gases, heated and in counterflow, or other photochemical techniques are employed.

8. - Procedure for detection of species according to claim 1 **characterized in that** in the stage of adjustable concentration, depending on the concentration level of species reached in preceding processes, in an additional manner a cleaning is carried out of some adsorbing elements, filters and the rest of the elements in the line, employing some counterflow means.

9. - Device for detection of chemical species **characterized in that** it consists of a set of modules mounted sequentially for the discrimination of species according to different criteria of physical, chemical and electrical nature which has at least:
● a first admission module (1),
● a concentrator (2)
● an ionization third module (3),
● a injection fourth module (4)
● a fifth module (5) constituted by a differential mobility analyzer DMA,
● a signal processing module (8).

10. - Device for detection of chemical species according to claim 9 **characterized in that** the sample-acquisition first module (1) has one or more suction intakes (1.1).

11. - Device for detection of chemical species according to claim 9 **characterized in that** the sample-acquisition first module (1) has a directional intake with capacity for omnidirectional detection of the direction of maximum concentration.

12. - Device for detection of chemical species according to claim 10, **characterized in that** the sample-acquisition first module (1) has a multiplexer (1.2) to define the intake (1.1) through which the sample is introduced.

13. - Device for detection of chemical species according to claim 9, **characterized in that** the concentrator module (2), is comprised by elementary modules (2.3) of adsorption and desorption operating to establish a global process of continuous concentrator.

14. - Device for detection of chemical species according to claim 13, **characterized in that** the second module (2) has chemical and/or physical filters (2.1, 2.2) for predetermined characteristic diameters.

15. - Device for detection of chemical species according to claim 13 **characterized in that** the second module (2) has in each elementary module (2.3) of adsorption and desorption, intake (2.3.1) and outlet (2.3.2) valves for the main stream and intake (2.3.4) and outlet (2.3.5) valves for the secondary stream allowing one and the other stream alternately.

16. - Device for detection of chemical species according to claim 13 **characterized in that** the second module (2) includes heating in the outlet pipes of the secondary stream to avoid condensation.

17. - Device for detection of chemical species according to claim 13, **characterized in that** the second module (2) includes an impeller drive pump (2.7) for the main stream in the manifold of the outlets of the elementary modules (2.3) of adsorption and desorption.

18. - Device for detection of chemical species according to claim 9 **characterized in that** the third module (3) carries out a chemical ionization, by photoionization, or by means of radiation sources adapted to the ionization capabilities of the target substance.

19. - Device for detection of chemical species according to claim 9 **characterized in that** the injection fourth module (4) is for the separation of charged species with evacuation of the main stream and with stream-free independent outlet of the charged species, having an outlet of the main stream, after the removal of the charged species, connected with the admission of the secondary stream of the second module (2) by means of the discharge of the fluid by a pump (2.5) with filtration (2.4).

20. - Device for detection of chemical species according to claim 9 **characterized in that** the fifth module (5) is a differential mobility analyzer (DMA) which admits the injection of charged species without intake stream.

21. - Device for detection of chemical species according to claim 9, **characterized in that** to the outlet of the fifth module (5) incorporates, for enhancing the overall resolution, a mass spectrometer based on measuring the time of flight.

22. - Device for detection of chemical species according to claim 9 **characterized in that** at the outlet of the fifth module (5) a module of non-linear discrimination is incorporated, for enhancing the overall resolution.

23. - Device for detection of chemical species according to claim 13, **characterized in that** the second module (2) can have additional filters (2.6) at the outlet of the secondary stream.

24. - Device for detection of chemical species according to claim 13, **characterized in that** the concentrator module (2) has a counterflow line (2.9) with clean and heated air to perform the cleaning of the adsorbing elements, of the filters and of the rest of the line elements, coming possibly from a secondary circuit or from a specific cleaning module, this counterflow line being mounted with the objective of avoiding false positives.

25. - Device for detection of chemical species according to claim 9, **characterized in that** the device additionally to the modules previously claimed has some means for its self-cleaning using for this a combination of flows of inert gases, heated and in counterflow or other photochemical techniques.

26. - Device for detection of chemical species according to claim 9, **characterized in that** part of the concentrator module (2) is bypassed by means of an alternative pipe (2.8) employed in those cases in which the concentration of the desired species is sufficiently high, with the objective of avoiding the saturation of ensuing stages.

27. - Device for detection of chemical species according to claim 9, **characterized in that** starting from the concentration stage the modules and connections are kept at a temperature above the condensation point of the species.

28. - Device for detection of chemical species according to claim 9, **characterized in that** additionally to the previously claimed modules, a ninth module (9) is added which performs the localization of the source of the target substance in combination with the data of the sample extraction sites which the admission module provides and the signal processing carried out by the eighth module (8).

29. - Device for detection of chemical species according to claim 9, **characterized in that** to assure the proper operation of all the previous modules and their respective analog and digital signals it has an automatic control module (10).

30. - Device for detection of chemical species according to claim 13, **characterized in that** the device has control over the concentration of the adsorbing elements of the elementary modules (2.3) of the concentrator (2), by means of the variation of both the primary and secondary flow rates with the objective of avoiding the saturation of the equipment.
